# FASCICULE DE BREVET EUROPEEN

(11) **EP 3 127 336 B1**
(45) Date de publication et mention de la délivrance du brevet: **09.12.2020**
(21) Numéro de dépôt: 15717045.7
(22) Date de dépôt: 31.03.2015
(51) Int. Cl.: H04N 21/2343, H04N 21/422, H04N 21/436, H04N 21/6587

(54) **DISPOSITIF ET PROCÉDÉ DE COMMANDE A DISTANCE DE LA RESTITUTION DE CONTENUS MULTIMEDIA**
VORRICHTUNG UND VERFAHREN ZUR FERNSTEUERUNG DER DARSTELLUNG VON MULTIMEDIA-INHALTEN
DEVICE AND METHOD FOR REMOTELY CONTROLLING THE RENDERING OF MULTIMEDIA CONTENT

(30) Priorité: 31.03.2014 FR 1452834
(43) Date de publication de la demande: 08.02.2017
(73) Titulaire: ORANGE, 75015 Paris (FR)
(72) Inventeur: CONAN, Martin, 35510 Cesson Sevigne (FR); LEPOIL, Elisabeth, 35135 Chantepie (FR); LEDUBY, Jean-Bernard, 22430 Erquy (FR)
(86) Numéro de dépôt international: PCT/FR2015/050822
(87) Numéro de publication internationale: WO 2015/150685

(56) Documents cités:
- EP-A1- 2 704 449
- WO-A1-2013/082333
- WO-A1-2013/093310
- WO-A2-03/088654
- CN-U- 203 136 074
- JP-A- 2001 061 110
- JP-A- 2005 033 268
- JP-A- 2010 263 636
- JP-A- 2012 090 136
- US-A1- 2002 031 120
- US-A1- 2003 046 709
- US-A1- 2007 101 381
- US-A1- 2008 263 608
- US-A1- 2012 102 184
- US-A1- 2012 274 863
- Clove Technology: "Sony Ericsson Xperia controlled with Television Remote Control", You Tube, 15 December 2011 (2011-12-15), page 1, XP054978531, Retrieved from the Internet: URL:https://www.youtube.com/watch?v=gq7tS8 AHiRw [retrieved on 2018-07-20]

## Description

### Domaine technique

L'invention s'applique à la restitution d'un contenu multimédia numérique sur un dispositif doté d'une fonction de restitution, dit dispositif de restitution, ou plus simplement téléviseur.

L'invention s'applique tout particulièrement à la commande à distance, aussi appelée télécommande, de la restitution de contenus numériques en provenance d'un réseau de communication étendu sur le dispositif de restitution, par le biais d'un dispositif de télécommande associé nativement au dispositif de restitution.

### Etat de la technique

Avec le développement des réseaux et des terminaux, il est aujourd'hui usuel de restituer des contenus multimédia (vidéo, audio, etc.) sur un dispositif quelconque d'un utilisateur, par exemple un téléviseur ou une tablette numérique, en provenance du réseau Internet. Par contenu numérique, on entend des films, des vidéos, ou de manière plus générale tout type de contenu multimédia numérique qui peut être transmis dans le réseau Internet considéré. On parle aussi de contenus reçus en « streaming » ou « streamés » pour indiquer par là qu'ils sont reçus par un téléchargement continu en provenance du réseau Internet et peuvent être restitués en temps réel sur un terminal de l'utilisateur. Pour recevoir le contenu numérique, le terminal émet généralement une requête à destination d'un serveur qui se trouve dans le réseau large-bande, en indiquant une adresse du contenu souhaité, et il reçoit en retour un flux de données numériques relatives à ce contenu.

La restitution consiste à fournir, au niveau du dispositif de restitution, le contenu numérique sous une forme accessible à l'utilisateur. Par exemple, des données reçues correspondant à une vidéo numérique sont généralement décodées, puis restituées au niveau du dispositif de restitution sous la forme d'un affichage, ou visualisation, de la vidéo correspondante avec sa bande-son associée.

Le dispositif de restitution, en particulier s'il s'agit d'un téléviseur, est généralement fourni à l'utilisateur avec un dispositif de télécommande, que l'on appellera par la suite « télécommande native », prévue pour commander la restitution des contenus en provenance d'un réseau diffusé, par exemple de type DVB (acronyme de Digital Video Broadcast, pour un ensemble de normes de télévision numérique diffusée par câble, satellite ou réseau hertzien). On considère ici que cette catégorie de contenus diffusés inclut également les contenus de type DVB-IP, aussi appelés IPTV, c'est-à-dire la diffusion de télévision numérique ou la fourniture de contenus sur le réseau Internet sous le contrôle d'un opérateur de service.

Afin de démultiplexer et décoder les programmes diffusés, un tel téléviseur est classiquement relié à un décodeur numérique, d'appellation courante STB (pour sa dénomination anglo-saxonne Set Top Box). Alternativement, le décodeur numérique peut être intégré au téléviseur. La télécommande native est donc soit celle du téléviseur, soit celle du décodeur numérique (STB).

Un téléviseur peut aussi être prévu pour accéder aux contenus *streamés* sur le réseau de communication étendu, en anglais, WAN, acronyme de *Wide Area Network* par opposition au LAN *(Local area Network)* de portée locale. On parle, dans ce cas, de télévision « connectée », c'est-à-dire que le TV peut être raccordé au réseau Internet afin de fournir un ensemble de services enrichis aux utilisateurs. Si la restitution ne s'effectue pas sous le contrôle d'un opérateur de service, on parle aussi dans ce cas de contenus de type OTT, acronyme de l'appellation anglaise « Over The Top ». La télévision OTT permet à un utilisateur d'un TV connecté au réseau Internet de restituer des chaînes numériques ou des contenus Web sur le téléviseur.

Généralement, ce type de téléviseur « connecté » peut s'interfacer avec le réseau local de l'utilisateur et par là accéder à un serveur de contenus dans le réseau étendu.

Si le TV n'est pas connecté, il est usuel d'y connecter un autre terminal, par exemple un ordinateur personnel (PC) ou un module spécifique (sous forme par exemple de clé électronique) pour accéder aux contenus *streamés* d'Internet et les transmettre au téléviseur, via notamment son interface HDMI (de l'anglais *High Definition Multimedia Interface),* une interface de communication numérique apte à transmettre des signaux audio et vidéo non compressés avec une définition élevée, normalisée par le forum HDMI.

Que le TV soit connecté ou non, sa télécommande native ne permet pas de contrôler les programmes reçus en téléchargement progressif du réseau internet. En effet, une action sur cette télécommande (par exemple, une pression sur la touche « 2 »), permet de basculer sur la deuxième chaîne d'un réseau diffusé (DVB, DVB-IP) mais ne permet pas d'accéder au contenu (par exemple la chaîne numéro 2) sur le serveur de contenus proposés en téléchargement progressif.

L'utilisateur doit donc, s'il souhaite accéder aux contenus en téléchargement progressif, utiliser un menu ou une télécommande spécifique associée aux contenus internet.

Par exemple, il est connu d'utiliser un téléphone mobile *(smartphone)* ou une tablette numérique pour sélectionner des programmes Internet destinés à être joués sur le téléviseur, que ce téléviseur soit de type connecté ou non.

Cependant la télécommande native (du téléviseur ou de la STB) possède sur ce type de télécommande l'avantage de la simplicité et de la disponibilité.

Le document US 2012/102184 décrit un dispositif numérique comprenant une logique de streaming pour commander un réglage par l'utilisateur des paramètres de lecture d'un contenu en streaming, notamment l'ajustage d'une résolution d'affichage du contenu d'entrée et le débit auquel le contenu est téléchargé. Ce dispositif peut être connecté à un téléviseur via un port HDMI. Il propose selon un mode de réalisation d'utiliser une télécommande pour afficher une interface utilisateur afin d'ajuster les paramètres de streaming du contenu. Par la suite, l'utilisateur peut utiliser la télécommande pour naviguer dans l'interface utilisateur qui lui est proposée.

Le document US2008/263608 enseigne un système et un procédé pour la restitution des programmes multimédias téléchargés progressivement. Un tel système comprend par exemple une Set-Top Box (STB) avec un élément de commande pour déterminer une longueur d'un programme à partir d'un catalogue de programmes et présente, en fonction de ladite longueur, une partie du programme pendant qu'il est délivré au décodeur.

Le document US 2012/274863 décrit un dispositif de télécommande natif qui permet de sélectionner différents modes de restitution, dont un mode de web-streaming. La télécommande permet de contrôler différents équipements en définissant des correspondances entre les touches de la télécommande et les actions à déclencher en fonction du contexte d'utilisation.

Cependant, dans ces systèmes et dispositifs, quand bien même la télécommande native du téléviseur est utilisée pour commander le streaming, les commandes générées restent dépendantes du type de téléviseur pour lequel la commande native a été conçue.

Il n'existe pas, à ce jour, de possibilité pour utiliser une télécommande native pour contrôler à la fois la réception de programmes classiquement obtenus via le réseau diffusé (DVB ou TVIP) et la réception de programmes en téléchargement progressif depuis le réseau internet étendu, et ceci pour n'importe quel type de téléviseur.

L'invention offre une solution ne présentant pas les inconvénients de l'état de la technique.

### L'invention

A cet effet, selon un aspect fonctionnel, l'invention a pour objet un procédé de commande de restitution d'un contenu numérique disponible en téléchargement progressif. Un mode de réalisation est détaillé à l'appui de la revendication indépendante 1 et de ses dépendantes. D'autres modes de réalisation sont fournis à titre d'exemple.

L'invention offre l'avantage de pouvoir utiliser la télécommande native du téléviseur (ou celle de la STB si le téléviseur est connecté à un tel dispositif) pour émettre des commandes de téléchargement progressif vers le serveur de contenus, par exemple pour passer au contenu suivant (film, musique, épisode de série, etc.), changer de bande sonore, rajouter une piste de sous-titres, etc. La commande reçue est transmise par le téléviseur à un dispositif de déport, qui se trouve situé dans le réseau local piloté par la passerelle de service et qui effectue alors une conversion de la commande reçue vers une commande intelligible en téléchargement progressif, par exemple l'adresse du contenu sur le serveur de contenus, sous forme d'une adresse de type HTTP (URL) et de paramètres associés.

Ce mode de réalisation permet notamment de transcrire une requête propriétaire reçue de la télécommande native vers une commande « universelle » de *streaming.* En effet, une action sur la télécommande d'un dispositif de restitution (par exemple « P+ ») peut se traduire différemment (par des commandes de codes binaires différents) selon de type ou la marque d'un tel TV. Ce mode de réalisation de l'invention permet de faire abstraction de ce problème en utilisant une mise en correspondance simple (par exemple, une table de conversion en mémoire accessible à partir du dispositif de commande) pour traduire une commande donnée (par exemple, le code de commande binaire « 001 ») d'un dispositif de restitution donné (par exemple, « S ») en une commande de streaming intelligible (par exemple : « passer au programme suivant »).

Cette table de correspondance peut dépendre du type d'interface utilisé pour recevoir l'ordre de commande et le transmettre subséquemment au dispositif de contrôle de la restitution : il peut s'agir de transmettre la commande au dispositif de commande qui se trouve par exemple dans la passerelle de service, à partir du module WiFi du téléviseur connecté. On rappelle que l'appellation Wifi (pour « Wireless Fidelity ») rassemble des technologies de transmission sans fil permettant de créer des réseaux informatiques sans fil basés sur les normes de la famille IEEE 802.11. Avantageusement, si la commande est transmise directement depuis le téléviseur sur une liaison HDMI à un dispositif (clé HDMI, PC etc.) connecté au téléviseur, une telle étape de mise en correspondance permet notamment de s'affranchir des informations propriétaires véhiculées via la norme HDMI-CEC. On rappelle qu'une connectique de type HDMI est prévue tout particulièrement pour véhiculer les contenus numériques comportant de l'image et du son avec un débit élevé (en haute-définition) et de manière fiable. Elle est aujourd'hui largement répandue et se trouve présente sur la plupart les terminaux vidéo du marché (téléviseurs, lecteurs DVD, ordinateurs, etc.). Avantageusement, la spécification HDMI-CEC (de l'anglais « Consumer Electronics Control ») peut être utilisée. L'une des broches de l'interface HDMI est alors dédiée à un ensemble de fonctions de contrôle entre appareils. Quand elle est mise en œuvre par le constructeur, la spécification CEC autorise des fonctions de contrôle diverses sur des équipements connectés et notamment, lorsque les appareils connectés sont compatibles, d'instaurer une communication bidirectionnelle entre eux et d'enchaîner différentes commandes (jouer le contenu, l'accélérer, le mettre en pause, couper le son, passer au programme suivant, changer de programme, etc.). Les commandes HDMI-CEC dépendant largement des constructeurs, une table de correspondance telle que proposée permet de s'en affranchir.

L'invention sera mieux comprise à la lecture de la description qui suit, donnée à titre d'exemple et faite en référence aux dessins annexés.

### Description détaillée d'un exemple de réalisation illustrant l'invention

La figure 1 représente un dispositif de restitution associé à un dispositif de télécommande natif dans un réseau local et une passerelle de service hébergeant un module de commande selon un premier mode de réalisation de l'invention.
La figure 2 représente un dispositif de restitution associé à un dispositif de télécommande natif dans un réseau local et une clé électronique (dongle) hébergeant un module de commande, selon un second mode de réalisation de l'invention.
La figure 3 représente une architecture matérielle d'une passerelle de service intégrant un dispositif de commande selon un mode de réalisation de l'invention.
La figure 4 représente une architecture matérielle d'une clé électronique incluant un dispositif de commande selon un autre mode de réalisation de l'invention.
La figure 5 représente un chronogramme des échanges entre un dispositif de commande sur une passerelle domestique et un téléviseur selon un mode de réalisation de l'invention.
La figure 6 représente un chronogramme des échanges entre un dispositif de commande sur une clé électronique et un téléviseur selon un autre mode de réalisation de l'invention.

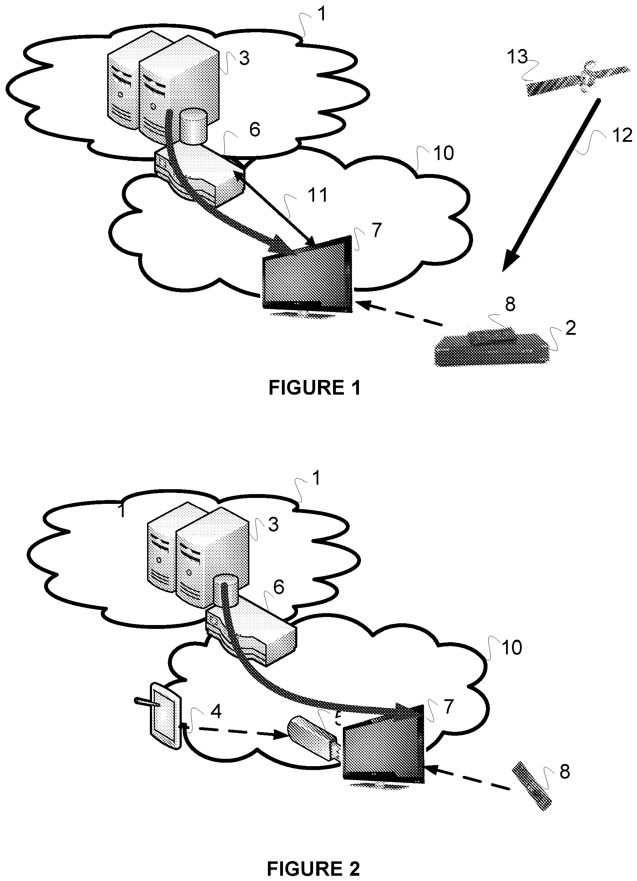

La figure 1 représente un dispositif de restitution associé à un dispositif de télécommande natif dans un réseau local et une passerelle de service hébergeant un module de commande selon un premier mode de réalisation de l'invention.

Le réseau local (10) de l'utilisateur (non représenté) est connecté au réseau étendu (WAN, 1) via une passerelle de service (6). Le réseau local (10) comprend un dispositif de restitution (7), ou plus simplement téléviseur (TV), d'un utilisateur. Dans ce mode de réalisation le téléviseur est de type connecté, c'est-à-dire qu'il dispose d'un module de communication WiFi et fait partie des terminaux connectés dans le réseau local à la passerelle de service (6).

On rappelle ici qu'un réseau local, aussi appelé réseau domestique, est un réseau informatique qui relie ensemble, avec ou sans fils, les terminaux d'une maison (ordinateurs, périphériques d'impression, de restitution, de stockage, etc.) aptes à communiquer ensemble. Un réseau domestique comporte généralement un équipement routeur, aussi communément appelé passerelle domestique, ou passerelle de service, élément intermédiaire assurant la redirection, ou routage, des paquets de données entre les différents terminaux et les réseaux qui lui sont connectés. Un tel réseau domestique connecte souvent les différents terminaux en utilisant une technologie sans fils WiFi ou filaire Ethernet, les deux types de support étant prévus pour des communications basés sur les protocoles de la famille IP *(Internet Protoco*/*),* protocole de base pour les réseaux de type Internet et par extension, nom du réseau lui-même). A cet effet, La passerelle de service comporte une fonction de communication WiFi, ou point d'accès WiFi (en anglais : AP, pour *Access Point),* qui lui permet de communiquer sans fils avec les terminaux du réseau. Ce point d'accès inclut un module radio bidirectionnel pour émettre ou recevoir les signaux dans le réseau local.

Le contexte du réseau local domestique (10) est donné à titre d'exemple et pourrait être transposé aisément à celui d'un réseau d'entreprise.

Les terminaux du réseau local sont aptes à établir des connexions avec la passerelle de service (6) reliée par ailleurs à un réseau de communication étendu (1) par une liaison haut débit. Le réseau (10) est par exemple un réseau local IP et la liaison haut débit est de type ADSL (de l'anglais *Asymmetric Digital Subscriber Line).* Le réseau de communication étendu (1, WAN) est également dans cet exemple de type IP et contient un serveur de contenus multimédia (3) qui héberge notamment des contenus numériques pour une mise à disposition des terminaux du réseau local (10) en mode de streaming. Le serveur de contenus (3) se trouve selon cet exemple dans le réseau étendu (1) mais il pourrait, selon un autre exemple, être situé dans un réseau local, par exemple au niveau de la passerelle de service (6) ou tout autre équipement capable d'héberger un tel serveur de contenus.

Par la suite, on entend par dispositif terminal, ou plus simplement « terminal », tout dispositif apte à se connecter à la passerelle (6), tel un ordinateur ou un dispositif du type téléviseur (TV), ordinateur personnel (PC), *Smartphone* (téléphone mobile intelligent), PDA (« Personnal Digital Assistant ») ou plus généralement tout dispositif apte à communiquer avec ou sans fils avec la passerelle de service.

Le téléviseur (7) est typiquement connecté par ailleurs à un réseau numérique diffusé de type DVB (acronyme de Digital Video Broadcast, un ensemble de normes de télévision numérique édictées par le consortium européen DVB). L'infrastructure sous-jacente peut avoir pour support le satellite (13) ou la télévision numérique de terre (TNT), ou encore le câble, non représenté. Alternativement ou de manière complémentaire, le téléviseur (7) pourrait également être connecté à un réseau de type DVB-IP, aussi appelé IPTV, c'est-à-dire assurant la diffusion de télévision numérique ou la fourniture de contenus, par exemple en VOD (VidéO à la Demande) à partir du réseau Internet sous le contrôle d'un opérateur de service assurant la qualité de la délivrance (par exemple, la TV d'un opérateur, associée à un décodeur numérique et une passerelle domestique du même opérateur). Différents programmes diffusés sont ainsi répartis dans des flux de transport différents, aussi appelés multiplex (12). Les multiplex sont reçus par des décodeurs numériques, aussi appelés STB (Set Top Box, 2) via des supports de réception appropriés (antennes, câbles, ADSL, etc.) et les différents programmes qui les constituent sont démultiplexés et décodés avant restitution par le téléviseur connecté à la STB. Alternativement, le décodeur peut être intégré dans le téléviseur (la plupart des téléviseurs sont aujourd'hui équipés de décodeurs numériques pour la TNT). Le décodeur et/ou le téléviseur est classiquement équipé d'une télécommande native (8) qui permet de contrôler les contenus diffusés en navigant dans le menu du décodeur. La télécommande comporte un certain nombre de touches de navigation pour interagir avec le décodeur. Alternativement, la télécommande comporte un écran tactile. Elle communique de manière unidirectionnelle avec le décodeur ou téléviseur, par exemple par liaison infrarouge, et transmet des commandes simples en fonction de touches pressées par un utilisateur dans l'interface, ou de commandes passées via un écran tactile de la télécommande.

Le téléviseur (7), étant de type connecté selon ce mode de réalisation, est capable de communiquer directement en IP (WiFi) avec la passerelle de service (6). Selon une variante, il est relié via son port HDMI à un dispositif externe comme par exemple, selon ce mode de réalisation, la passerelle de service (6). Selon un autre exemple, la connexion HDMI peut le relier à un dispositif de type STB (Set Top Box), lui-même connecté au réseau diffusé ou au réseau Internet. Selon encore un autre exemple, le téléviseur est relié via son port HDMI ou en WiFi à un PC connecté au réseau local de l'utilisateur. Selon encore un autre exemple, qui sera illustré plus tard à l'appui de la figure 2, le téléviseur est relié via son port HDMI à une clé électronique capable de se connecter au réseau local de l'utilisateur.

Dans ce contexte, on peut supposer que le téléviseur propose, via un affichage approprié, un guide de programmes/liste de contenus disponibles en *streaming* sur le serveur de contenus (3). L'utilisateur choisit de recevoir un contenu en *streaming,* par exemple une chaîne appelée CH1. La passerelle de service (6) se connecte au serveur de contenus (3) du réseau étendu (1) sur lequel elle récupère les contenus *streamés.*

Sur la figure 1, la flèche courbe représente le chemin du contenu depuis le serveur de contenus (3) jusqu'au téléviseur(7), en passant par la passerelle de service (6).

Dans ce contexte de réception, un problème résolu par l'invention est le suivant : une action sur une touche de la télécommande native, par exemple P+, n'est pas suivie d'une modification du programme reçu par le téléviseur car la télécommande n'est pas prévue pour piloter le *streaming* de contenus depuis le réseau Internet.

Selon cet exemple de réalisation, un module dit « module de commande », hébergeant un « procédé de commande » selon l'invention, a été préalablement installé sur la passerelle domestique. Ce module de commande reçoit en entrée la commande de base (par exemple, P+) issue de la télécommande native (8) du téléviseur et la transforme en ordre de *streaming,* c'est-à-dire qu'il génère une adresse de téléchargement à destination du serveur de contenus (3).

Pour accéder à un contenu multimédia en streaming sur un réseau de type Internet, le terminal client effectue en effet généralement une requête en deux étapes : une première étape consiste à télécharger un document décrivant les paramètres d'accès au service via le protocole HTTP (de l'anglais *Hyper Text Transport Protocol),* un protocole de communication client-serveur développé pour les réseaux Internet et en particulier le Web. Ce document peut être un fichier informatique ou un ensemble d'informations descriptives du contenu accessible à une certaine adresse sur un serveur de contenus. Dans la suite, on y réfèrera sous l'expression « fichier de description ». Lors d'une seconde étape, le terminal client accède au contenu sur le serveur et le service démarre effectivement, c'est-à-dire que le terminal client peut recevoir et afficher le contenu. Il est fréquent, dans ce contexte du protocole HTTP, de recourir, pour échanger les données entre le terminal client et le serveur, à une technique de type dit « streaming adaptatif » (HAS pour « HTTP Adaptive Streaming »). En HAS, classiquement, différents flux sont encodés, ou transcodés, pour la même vidéo, correspondant par exemple à différents débits, différentes résolutions, différentes qualités.

Il existe plusieurs solutions pour faciliter la mise à disposition et distribution d'un tel contenu en streaming, dont la norme MPEG DASH.

Un exemple de tel fichier de description, un fichier manifest (.mpd) inspiré de la norme MPEG-DASH, est fourni en annexe 1. Ce fichier manifest simplifié décrit des contenus numériques dans une syntaxe XML (de l'Anglais « eXtended Markup Language»), comprenant une liste de contenus sous forme de fragments classiquement décrits entre une balise ouvrante (<SegmentList>) et une balise fermante </SegmentList >. Chaque fragment correspond à une certaine durée (champ « duration ») avec plusieurs niveaux de qualité (la découpe en fragments permet notamment de s'adapter finement aux fluctuations de la bande passante) et permet de générer leurs adresses (URL - Uniform Resource Locator). Cette génération est faite dans cet exemple à l'aide des éléments « BaseURL » (« http://server.com») qui indique l'adresse du serveur de contenus (3) et « SegmentURL » qui liste les parties complémentaires des adresses des différents fragments :
- « CH1_FR/C1_500kb_1 .m4s» pour le premier fragment du contenu « C1 » à 500 kilobits par seconde (« kb ») au format MPEG-4 (« m4s ») en français (« _FR »),
- « CH1_FR/C1_500kb_2.m4s» pour le second fragment,
- etc.

On notera que ce téléchargement s'opère traditionnellement au travers d'une URL HTTP comme présentée ci-dessus, mais pourrait également s'opérer via une adresse universelle (URI) décrivant un autre protocole *(dvb:*//*monsegmentdecontenuC1* par exemple).

Une fois qu'il dispose de ces adresses de fragments, le module de commande selon l'invention peut procéder à l'obtention des fragments de contenu multimédia via un téléchargement à ces adresses. Par exemple, l'adresse composée correspondant au contenu C1 sur CH1 est de type: http://server.com/CH1_FR/C1_500kb_1 .m4s.

Le module de commande peut accéder à un contenu décrit en streaming via ce fichier.

Connaissant un premier contenu qui est en cours de *streaming* (C1 sur CH1), le module de commande peut aussi, grâce à une analyse de ce type de fichier de description, accéder aux fragments d'un second contenu, soit sur la même chaîne (C2 sur CH1), soit sur une autre chaîne (CH2), etc.

Dans le contexte de ce mode de réalisation, le rôle du module de commande est donc de recevoir l'ordre de basculement de programme (P+) en provenance du téléviseur, sélectionner par exemple dans le fichier de description le contenu approprié (le programme suivant CH2 du programme courant CH1) au débit approprié pour le téléviseur, et enfin émettre l'ordre de *streaming* vers le serveur de contenus (3) pour récupérer le programme CH2 afin de le délivrer au téléviseur.

Alternativement, le module de commande décrit ici se trouve dans le téléviseur connecté lui-même, ou dans tout autre équipement du réseau local.

On va décrire maintenant un second mode de réalisation de l'invention à l'appui de la figure 2 qui représente un dispositif de restitution associé à un dispositif de télécommande natif dans un réseau local et une clé électronique *(dongle)* hébergeant un *streameret* module de commande selon l'invention, connectée sur le port HDMI du téléviseur.

Un réseau local (10), piloté par une passerelle de service (6), comprend ici un dispositif mobile (4) et un dispositif de déport (5) qui prend la forme d'une clé électronique. La passerelle de service (6) est, dans cet exemple, comme précédemment, une passerelle de service (6) qui assure le routage des données dans le réseau local (10) et entre le réseau local (10) et le réseau large-bande (1) dans lequel se trouve le serveur de contenus (3). La passerelle de service (6) est par exemple un équipement routeur connu sous la désignation commerciale de *Livebox©.* Dans cet exemple, le dispositif mobile (4) est également connectable à un réseau mobile non représenté. Le réseau mobile est un réseau mobile de radiocommunication cellulaire, par exemple de troisième génération (3G, par exemple selon le standard UMTS « Universal Mobile Telecommunications System » bien connu de l'homme du métier) ou encore de quatrième génération (4G, par exemple selon le standard LTE pour « Long Term Evolution »), etc.

Le contexte de ce mode de réalisation est celui de la télévision mobile reçue initialement sur un dispositif mobile d'un utilisateur, dans l'exemple de la figure 2 le smartphone (ou tablette numérique) (4) de l'utilisateur. Dans un certain nombre de situations, et notamment lorsque l'utilisateur du dispositif mobile se trouve à la maison, il lui est plus agréable de restituer le contenu multimédia, par exemple un film, sur son poste de télévision, disposant d'un plus grand écran que le dispositif mobile. Un utilisateur du réseau local possède donc dans ce mode de réalisation au moins deux dispositifs, un dispositif mobile (4) et un dispositif de restitution (7), ici un TV. L'utilisateur restitue sur l'écran du dispositif de restitution (7) un contenu dont la sélection préalable a été effectuée sur le dispositif mobile : en utilisant une application sur son dispositif mobile, dans notre exemple une application TV qui lui a été préalablement fournie par son opérateur de réseau et/ou de services, l'utilisateur sélectionne un contenu multimédia (audio, vidéo, etc.) disponible sur un serveur de contenus (3) destiné à être rendu sur le TV (7) associé au périphérique de déport (5), connecté dans cet exemple sur le port vidéo HDMI du téléviseur (7) de l'utilisateur et se présentant sous la forme d'une clé électronique.

Les contenus sont, selon cet exemple, des contenus « Live » c'est-à-dire destinés à être délivrés en temps réel aux clients de l'opérateur, ou utilisateurs du réseau local. Il s'agit par exemple d'une chaîne de télévision en *streaming.*

On suppose que les deux équipements (le mobile et la clé) sont connectés au réseau local (10) et aptes à communiquer entre eux. Pour dialoguer sur la session établie entre le dispositif mobile et la clé, un protocole applicatif de type HTTP peut être classiquement utilisé en association avec le protocole *WebSocket* (WS) qui permet d'assurer les communications bidirectionnelles entre le client et le serveur HTTP, en l'occurrence le dispositif mobile et le dispositif de déport.

Le dispositif de déport prend le contrôle du téléviseur et affiche éventuellement un menu correspondant aux contenus disponibles sur le serveur de streaming. Cette prise de contrôle positionne le dispositif de restitution dans un mode dit « mode de téléchargement progressif » par opposition au mode natif (DVB) du téléviseur.

Une fois que le dispositif de déport (5) est connecté au réseau local via la passerelle de service, et a pris contrôle du téléviseur via la liaison HDMI, un contenu peut être choisi et déporté sur le téléviseur (7). Une application s'exécutant sur le dispositif mobile (4) permet à l'utilisateur de sélectionner un contenu multimédia puis après sélection d'une fonction du mobile (activation d'une touche, bouton, zone tactile, commande vocale, etc.), la demande d'accès au contenu multimédia est redirigée vers le dispositif de déport qui héberge selon ce mode de réalisation le module de commande. Le dispositif de commande transforme l'identifiant du contenu en adresse valide pour le serveur de contenus (3) du réseau large bande (1), auquel il se connecte, et sur lequel il récupère le contenu (CH1), préférentiellement avec une qualité ou une résolution plus élevée que celle, initiale, du mobile, et sans passer par le dispositif mobile. Le contenu peut être récupéré en *streaming* sur le serveur (3) du réseau étendu conformément à MPEG-DASH (comme proposé précédemment à l'appui de la figure 1 sur la base de l'exemple simplifié du fichier XML de l'annexe 1) et restitué sur l'écran du téléviseur (7). La flèche courbe de la figure 2 symbolise le trajet du contenu numérique.

Si l'utilisateur souhaite changer de programme alors qu'il est en train de visualiser le canal 1 (CH1) en streaming, deux solutions lui sont offertes dans le contexte de ce mode de réalisation de l'invention : soit il effectue une sélection avec le mobile utilisé comme télécommande, soit il effectue une sélection avec sa télécommande native. Le module selon l'invention prend alors en charge, dans les deux cas, la conversion de l'ordre reçu vers une requête de *streaming :*
• En provenance de la télécommande native via le port HDMI : comme précédemment, l'ordre est reçu sur la clé en provenance du téléviseur, via le port HDMI et le protocole HDMI-CEC. Il est important de noter ici que Le protocole HDMI CEC ne normalise pas le format du train binaire qui est encapsulé dans les messages (qui sont pour leur part normalisés). Afin de pouvoir s'adapter aux usages propriétaires de chaque constructeur, l'invention permet de définir une table de conversion, ou mise en correspondance, entre la donnée reçue de la télécommande et la requête de streaming à générer, à destination du module de commande. Elle permet de s'interfacer avec les différents modèles de téléviseurs du marché et donc de s'affranchir de leurs particularités. Un tel exemple de table est fourni ci-dessous :
∘ La première colonne indique la commande qui a été sélectionnée sur la télécommande native (P+, P-, CHX, etc.) et transmise au TV par exemple via la liaison infrarouge, puis retransmise par le téléviseur sur la liaison HDMI via un code binaire encapsulé dans un message HDMI-CEC.
∘ La seconde colonne indique le nom du modèle, constructeur, etc.
∘ La troisième colonne indique le code binaire associé à la commande pour ce constructeur (« P+ » est représenté par le code « 0010 » pour le constructeur S et par le code « 0011 » pour le constructeur Q).
∘ La quatrième colonne indique l'ordre de sortie à fournir au dispositif de commande de restitution (« Programme suivant » pour « P+ »).

| *Commande reçue* | *Marque*/*type du TV* | *Train binaire HDMI-CEC* | *Commande pour le module de Commande* |
|---|---|---|---|
| P+ | S | 0010 | Programme suivant |
| P+ | Q | 0011 | Programme suivant |
| CH2 | S | 010010 | Canal 2 |

Par la suite, l'ordre de sortie est acquis par le dispositif de commande pour analyser un fichier de description, par exemple celui fourni avec l'annexe 1, pour déterminer l'adresse à sélectionner : s'il s'agit du programme suivant, le dispositif de commande, qui sait quel contenu est couramment en cours de restitution (CH1), peut analyser le fichier de description pour décider que le contenu suivant est le contenu CH2 (par tout procédé d'analyse à la portée de l'homme du métier) et lire l'adresse correspondante dans le fichier de description (par exemple l'adresse *http:*//*server.com*/*CH1_FR*/*C1_500kb_1.m4s).*
• En provenance de la télécommande secondaire (mobile) via le réseau local auquel sont connectés le mobile et la clé: la clé (5) est capable de recevoir des commandes de base transmises par l'application mobile sur le lien IP, comme par exemple :
∘ *ON, OFF pour* allumer/éteindre le TV.
∘ *V+, V-, Mute* pour augmenter, diminuer le son ou le rendre muet.
∘ *Tuner_Channel_Command:* pour la sélection directe d'un canal (CH1, CH2, etc.) à restaurer lorsque le mode de contrôle en téléchargement aura cessé et que le Tv reviendra à un mode « satellite »
∘ Etc.

• En cas de conflit, la clé HDMI affecte de surcroît une priorité à l'une ou l'autre des télécommandes. De préférence, une priorité plus élevée sera attribuée à la télécommande native.

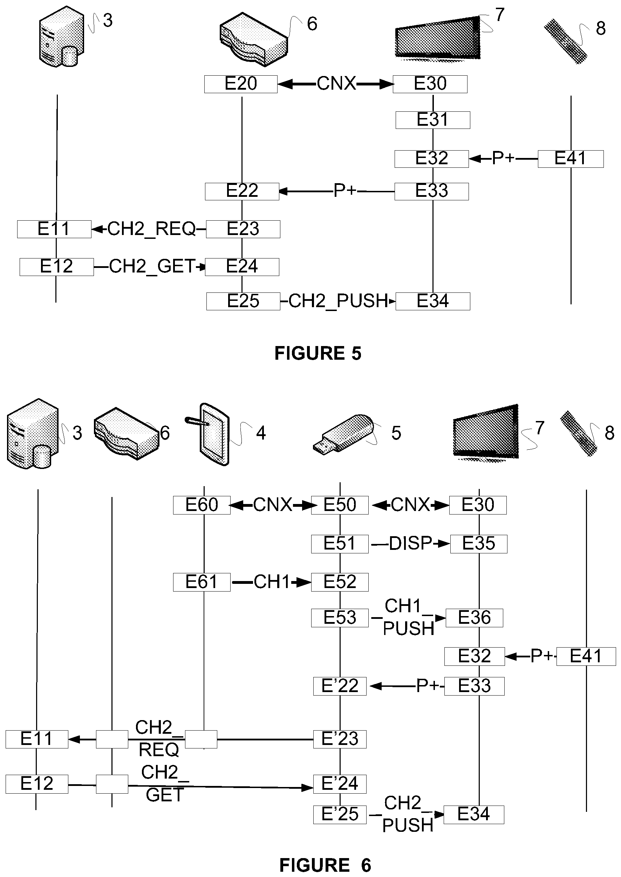

Ce mode de réalisation sera décrit plus en détails à l'appui de la figure 6.

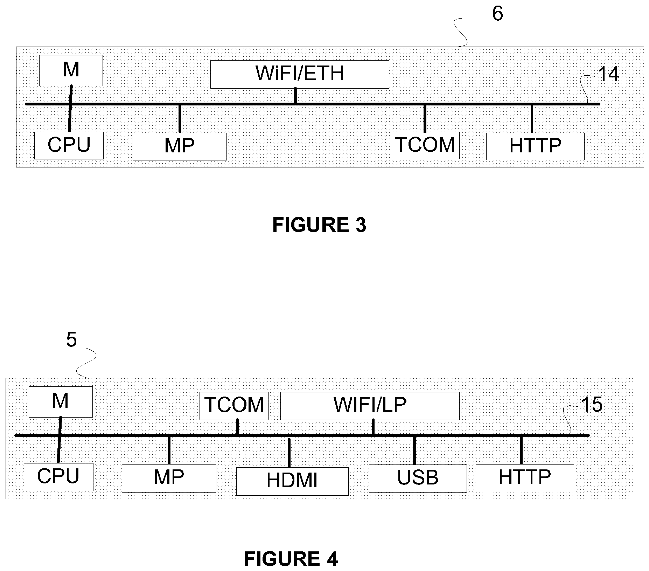

La figure 3 représente une architecture matérielle d'un dispositif hébergeant un module de commande selon un premier mode de réalisation l'invention, par exemple la passerelle numérique (6).

Le dispositif comprend, classiquement, des mémoires M articulées autour d'un processeur CPU. Les mémoires peuvent être de type ROM (de l'anglais *Read Only Memory)* ou RAM (de l'anglais *Random Access Memory),* amovibles ou fixes, etc. Il communique avec le réseau local (1) via le module de communication (WiFi/ETH) qui lui permet de se connecter avec fils (via un câble Ethernet) ou sans fils (via un canal radio de type WiFI, Bluetooth, Zigbee, etc.) aux terminaux du réseau local et au réseau Internet large-bande (1). Un câble Ethernet est avantageusement capable de transmettre des débits plus élevés que le WiFi pour fournir à l'utilisateur un contenu de bonne qualité.

Le module TCOM qui comprend le procédé de commande selon l'invention peut être logiciel et/ou matériel. Il est notamment capable d'effectuer les actions décrites à l'appui des figures 1 et 5 : connexion au téléviseur (de type connecté), réception d'une commande en provenance de sa télécommande native, adaptation de cette commande pour un accès en streaming, par exemple selon la norme MPEG-DASH (et dans ce cas, accès au fichier *manifest* de présentation des contenus, sélection d'un contenu proposé en fonction de la commande reçue et extraction de l'adresse pertinente) et envoi de la commande de *streaming* sur le réseau Internet étendu.

Une partie de la mémoire MEM contient notamment, en relation avec le procédé de commande, un ensemble de tables ou de fichiers (par exemple les fichiers *manifest* MPEG DASH et des tables de conversion discutées plus haut) qui permettent de convertir la commande reçue en provenance de la télécommande native (P+) en une commande de streaming intelligible (requête du programme CH2 qui suit le programme CH1).

La passerelle (3) comporte aussi un module de communication de type HTTP pour assurer les communications de type http avec le réseau local et le serveur de contenus, et un « media player » (MP) capable de restituer (recevoir, décoder, préparer) les flux en mode de *streaming* et de les délivrer au dispositif de restitution (TV) ; le « media player » comporte entre autres un ensemble de décodeurs (audio, vidéo, etc.) aptes à décoder les contenus multimédia.

La figure 4 représente une architecture matérielle d'un dispositif hébergeant un module de commande selon un deuxième mode de réalisation l'invention, par exemple la clé électronique correspondant au dispositif de déport (5) de la figure 2.

Le dispositif comprend également des mémoires M articulées autour d'un processeur CPU. Il communique avec le réseau local (1) via le module de communication (WiFi/LP) qui lui permet de se connecter de préférence sans fils (via un canal radio de type WiFI, Bluetooth, Zigbee, etc.) aux terminaux du réseau notamment au dispositif mobile (4). Il est alimenté via une interface série de type USB (USB). Il comporte aussi :
- un module d'interface avec le dispositif de restitution (HDMI) capable de s'interfacer physiquement et logiquement avec le téléviseur pour transmission du contenu multimédia (audio et vidéo) décodé, échange de commandes de base en provenance de la télécommande du téléviseur (programme suivant « P+ », programme précédent « P- », mode silence, augmentation du volume « vol+ », diminution du volume « vol- », etc.)
- un module de commande selon l'invention (TCOM), chargé de la gestion de la commande de streaming selon le mode de réalisation décrit précédemment à l'appui de la figure 2 (et conformément à la figure 6). Ce module est notamment capable, en relation avec l'invention, de prendre le contrôle du téléviseur en HDMI, de recevoir une commande du téléviseur selon la norme HDMI/CEC, en provenance de sa télécommande native, d'adapter cette commande pour un accès en streaming, par exemple selon la norme MPEG-DASH, de recevoir des commandes de contrôle de la restitution de la part du mobile agissant comme une télécommande, de lui transmettre des informations d'identification, d'état, etc. et de gérer les conflits entre les deux types de télécommande qui lui sont connectés, à savoir le mobile et la télécommande native, puis d'aller chercher en *streaming* un contenu repéré par son identifiant sur le réseau en passant par la passerelle de service (6).
- un « media player » (MP) capable de restituer (recevoir, décoder, préparer) les flux en mode de *streaming* et de les délivrer au dispositif de restitution (TV) ; le « media player » comporte entre autres un ensemble de décodeurs (audio, vidéo, etc.) aptes à décoder les contenus multimédia, ainsi qu'une interface de communication avec le dispositif mobile apte à interpréter les ordres en provenance de celui-ci.
- un module de communication de type HTTP pour assurer les communications de type HTTP, par exemple de type *Websocket* (WS) pour assurer la bidirectionnalité des échanges entre les deux dispositifs ; on notera qu'une communication de type WS est possible sur un lien Bluetooth.

La figure 5 représente un chronogramme des échanges entre un dispositif de restitution (TV,7) pilotable à distance par une télécommande native (8) et pate à communiquer via une liaison IP (WiFi, Bluetooth, Ethernet, etc.) à une passerelle de service (6).

Lors d'une première phase de préliminaires (étapes E20, E30) nécessaires à la mise en œuvre des prérequis de l'invention, le téléviseur se connecte à la passerelle de service via une connexion IP (WiFi, Bluetooth, etc.) ou HDMI.

Les deux appareils étant connectés, le module hôte sur la passerelle domestique prend le contrôle du téléviseur, en provoquant par exemple l'affichage d'informations relatives aux contenus disponibles en *streaming* sur un serveur de contenus (3). Cette prise de contrôle fait basculer le TV dans un mode dit « mode de téléchargement progressif » et dans lequel toutes les commandes reçues de la télécommande native vont être interprétées comme des commandes de *streaming.*

On suppose que l'utilisateur est en train de visualiser un premier contenu en streaming sur le canal 1 (E31, CH1). Il peut avoir sélectionné ce canal par exemple via sa télécommande, ou il peut s'agir d'un programme par défaut. Le dispositif de commande est alors capable de recevoir, lors d'une étape E32, des commandes de base sélectionnées sur la télécommande native (8) via sa liaison au téléviseur (P+, P-, Channel, langue, sous-titres, etc.).

L'utilisateur choisi, selon cet exemple, via sa télécommande, de recevoir le programme suivant en streaming, par exemple un canal « CH2 ». La sélection se fait via un bouton de la télécommande à l'étape E41, par exemple le bouton P+, et retransmise du téléviseur vers la passerelle lors d'une étape E33. Le module de commande sur la passerelle reçoit alors la commande « P+ « qui lui indique une volonté de l'utilisateur de passer au programme suivant.

Lors d'une étape E22 de réception sur la passerelle, la commande (P+) est mise en forme. Alternativement, elle peut avoir été mise en forme préalablement si le module de commande se trouve dans le téléviseur connecté. A cet effet, la passerelle de service (6) accède au fichier *manifest* puis génère une nouvelle adresse pour le serveur de contenus. La requête HTTP de streaming (CH2_REC) pour le programme CH2 qui suit le programme CH1 en cours peut être, conformément à l'exemple de fichier MPEG-DASH fourni en annexe 1 :
HTTP://server.com/CH2_FR/C1_500kb_1.m4s,
pour indiquer par exemple que le dispositif de streaming doit maintenant recevoir le programme « CH2 » du serveur « server » avec la bande son en français (FR) et un débit de 500kb/s.

Cette requête est générée au cours d'une étape E23, puis transmise au serveur de contenus (3) qui la reçoit lors de l'étape E11.

Le « Media Player » (MP) reçoit en retour le contenu en provenance du serveur de contenus (3) lors d'une étape E24, le décode, le met en forme, le fait jouer au fur et à mesure de sa réception et le transmet au dispositif de restitution qui est associé (TV, E25).

Selon un autre exemple, non limitatif, il peut recevoir une commande « LG_EN » qui lui indique un changement de langue et donc la nécessité de se procurer la bande sonore en anglais pour le film en cours de visualisation.

Si le contenu est protégé (ce qui peut être le cas de la VOD ou du « live »), les mécanismes habituels de gestion des droits numériques (DRM) peuvent être mis en place sans pour autant sortir du cadre de l'invention.

La figure 6 représente un chronogramme des échanges entre un dispositif de commande sur une clé électronique (*dongle,* 5) connectée au port HDMI du téléviseur, selon un autre mode de réalisation de l'invention dont le contexte a été décrit à l'appui de la figure 2.

Lors d'une première phase de préliminaires (E50, E30) nécessaires à la mise en œuvre des prérequis de l'invention, le *dongle* est connecté au port HDMI du téléviseur et prend le contrôle de la connexion. Il lui présente éventuellement une liste d'attributs : type de matériel, nom du constructeur (*vendorName*), modèle (*mode*/*Name*)*,* version de hardware/software (*hardwareVersion, softwareVersion*), numéro de série (*serialNumber*), *e*tc.

Lors d'une autre autre phase de préliminaires (E50, E60) nécessaires à la mise en œuvre des prérequis de l'invention, le *dongle* est connecté au dispositif mobile qui le commande. Ils peuvent communiquer via le réseau local ou un canal de communications dédié.

Les deux appareils étant connectés, la clé prend le contrôle du téléviseur (étape E51) et provoque l'affichage d'informations relatives aux contenus disponibles en streaming sur le téléviseur (E35). Par exemple, la clé électronique affiche un menu de bienvenue si aucun autre appareil n'est actif sur une entrée HDMI du téléviseur (DVD, SAT DVB, etc.). Si un programme est déjà actif sur le téléviseur, la clé HDMI ne fait rien. Selon un autre exemple, la clé électronique, en recevant une URL en provenance du mobile, prend le contrôle de l'entrée HDMI à des fins de restitution du contenu sur le téléviseur.

A partir de cet instant, le téléviseur est positionné dans un mode dit « mode de téléchargement progressif » dans lequel toutes les commandes reçues de la télécommande native vont être interprétées comme des commandes de *streaming.*

On suppose que l'utilisateur choisit un programme (CH1, E61), par exemple une chaîne de télévision, sur son application mobile (EPG). L'utilisateur choisit de déporter le flux audiovisuel de ce programme vers le *dongle* relié au téléviseur. Ce choix peut être fait par la sélection d'un bouton sur l'écran du mobile, présenté en vis-à-vis du programme CH1, par une commande vocale, une touche de clavier, etc. Le choix de ce programme (CH1) se traduit au niveau du dispositif mobile (E61) par l'émission d'un identifiant (CH1) du contenu sélectionné, par exemple un numéro, ou une adresse du flux vidéo à télécharger. Dans le cas de notre mode de réalisation, le dispositif de déport étant très simple, une adresse du contenu est transmise sous forme d'URL et reçue lors d'une étape E52. En variante, et notamment si le dispositif de déport possède les moyens matériels et logiciels adéquats, l'adresse reçue peut être modifiée avant l'accès au contenu (par introduction, par exemple, de paramètres supplémentaires).

Le module de commande sur la clé génère, lors d'une étape non représentée, une requête HTTP pour le canal 1, similaire à celle émise précédemment par la passerelle (CH1 _REC), la transmet à la passerelle de service qui la transfère au serveur de contenus, et la clé récupère le flux *streamé* qu'il fait jouer sur le TV lors d'une étape E36.

La suite du déroulement du procédé est transposable directement depuis la figure précédente en remplaçant le module de commande sur la passerelle par le module de commande sur la clé et/ou sur le mobile qui le contrôle. En effet, selon ses capacités, la clé peut héberger tout ou partie du module de commande, l'autre partie se trouvant sur le mobile.
- E32, E33 : transmission d'une commande de base en provenance de la télécommande native via la liaison HDMI-CEC à la clé (P+ , P, *Channel,* langue, sous-titres, etc.) ;
- E'23 : génération d'une adresse complète de streaming à destination du serveur de contenus. Par exemple, si l'utilisateur a choisi de passer au programme suivant, l'URL peut se présenter sous la forme :
   *HTTP:*//*server.com*/*CH2_FR*/*C1_500kb_1.m4s,*
   - Selon une première variante, la génération se fait sur la clé électronique elle-même; cette variante suppose que la clé dispose des moyens matériels et logiciels suffisants pour recevoir l'information binaire de la commande HDMI/CEC, l'interpréter en consultant la table de conversion (en fonction notamment du type de téléviseur, comme vu précédemment), accéder au fichier *manifest,* l'analyser et générer l'adresse correcte correspondant à la commande reçue.
   - Selon une seconde variante, non représentée, la génération se fait sur le dispositif mobile ; cette variante suppose que la clé, ne disposant pas des moyens adéquats pour générer elle-même l'adresse de streaming, transmet au mobile le code binaire (« 0010 ») de la commande reçue ou son interprétation (« programme suivant », en fonction notamment du type de téléviseur) et reçoit en retour, du mobile, l'adresse de *streaming.* C'est dans ce cas le mobile qui accède au fichier *manifest et* génère l'adresse correspondant à la commande reçue.
- Transmission de la requête au serveur de contenus via la passerelle de service (E'23, E11) et réception du contenu en streaming (E'24) par le « Media Player » (MP) de la clé en provenance du serveur de contenus (3); le MP décode, met en forme et fait jouer le contenu par le dispositif de restitution qui lui est associé (TV) par la liaison HDMI, au fur et à mesure de sa réception.

On notera que, dans ce contexte, des conflits peuvent se produire entre les deux télécommandes (par exemple, la clé électronique reçoit deux URL de contenus différents). Afin d'éviter ce type de conflits, une période de temps est définie (par exemple, 3 secondes) et mémorisée par le dispositif de commande selon l'invention. Par exemple, lors de la réception d'un première commande de la télécommande native, une horloge de décompte (en anglais, *timer)* est armée avec la période de temps choisie. Si une seconde commande est reçue de la part de la télécommande mobile dans le temps ou le décompte n'est pas écoulé (c'est-à-dire que l'on se trouve toujours dans l'intervalle de 3 secondes), la seconde commande ne sera pas interprétée par le dispositif de commande.

En effet, lors d'une étape facultative (non représentée), le dispositif de déport peut recevoir aussi des commandes en provenance du dispositif mobile transformé pour l'occasion en télécommande. Par exemple, il lui demande de passer au programme précédent (P-). Il est préférable dans ce cas de donner priorité aux commandes en provenance de la télécommande native, qui se trouve forcément dans la même pièce que le TV.

A la fin de la session de streaming (fin du film, etc.), l'application sur le dispositif de déport s'arrête et libère la connexion HDMI s'il n'y a plus de contenu en attente. Le dispositif de déport quitte le mode de téléchargement progressif dans lequel il avait été positionné et est prêt à recevoir une nouvelle commande de la part du mobile.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

Notamment, ces modes de réalisation peuvent être facilement transposés au cas où le dispositif mobile (4) se positionne comme point d'accès au réseau en mode de *tethering.* Dans ce cas, le dispositif mobile remplace la passerelle de service (6) mais les échanges ne sont pas modifiés.

### Annexe 1 : exemple de fichier manifest simplifié MPEG-DASH

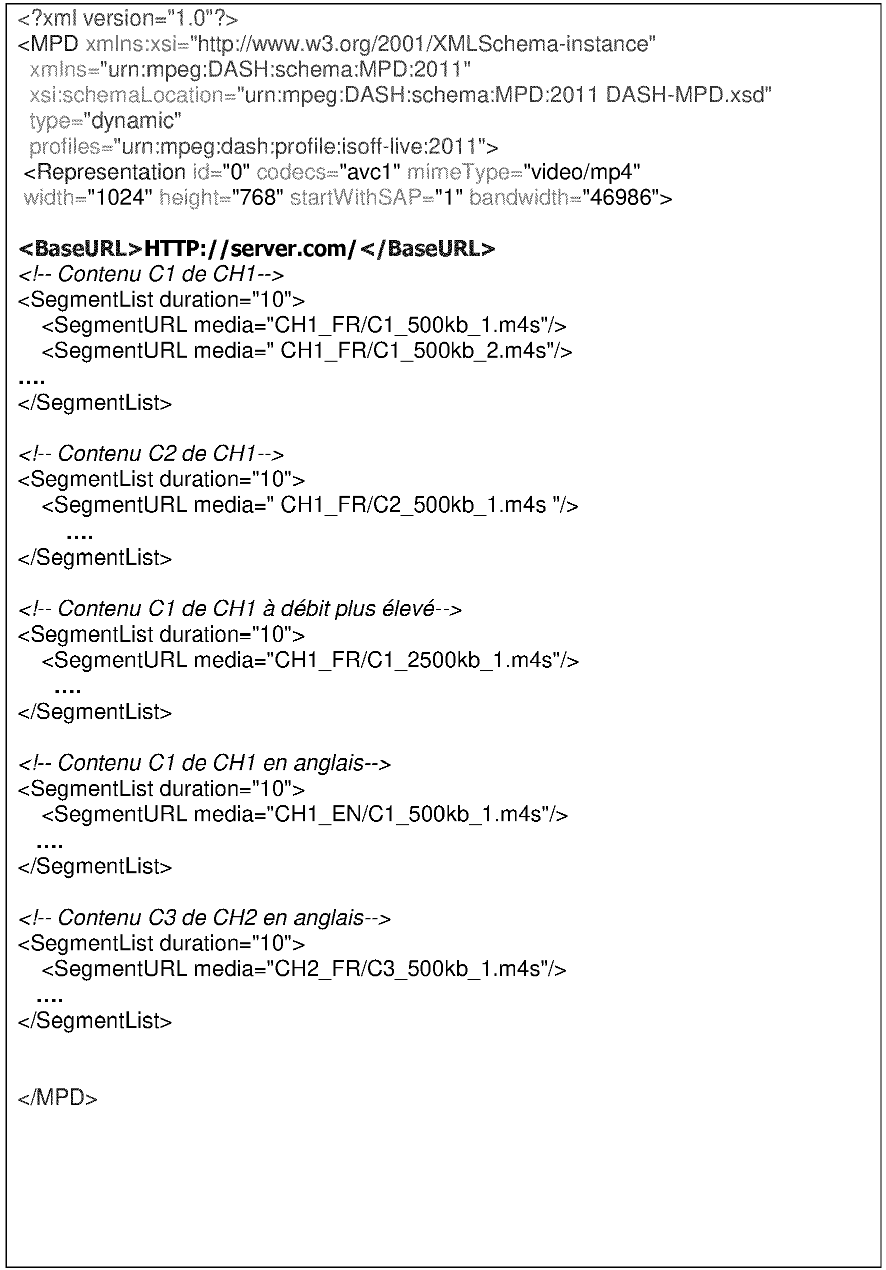

## Revendications

1. Procédé de commande de restitution d'un contenu numérique (CH1, MV1, CH2) disponible en mode de téléchargement progressif sur un serveur de contenus (3) dans un réseau de communication étendu (1, WAN), ledit contenu étant accessible via au moins une passerelle de service (4,6) et pouvant être téléchargé pour être restitué sur au moins un téléviseur (7) apte à recevoir des contenus numériques :
- selon un premier mode, en provenance d'un réseau diffusé de télévision (DVB) ;
- selon un second mode, dit mode de téléchargement progressif, en provenance d'un dispositif de déport (clé TV) connecté au téléviseur via un port HDMI, ledit téléviseur étant équipé d'un dispositif de télécommande natif (8) apte à contrôler la réception de programmes selon le premier mode, le procédé de commande étant **caractérisé en ce qu'**il comporte les étapes suivantes sur un module de commande situé sur le dispositif de déport :
- prise de contrôle du dispositif de restitution afin de le positionner dans le second mode, dit mode de téléchargement progressif (E20, E30, E50) ;
- réception (E22, E'22), en provenance du dispositif de restitution (7), au format HDMI-CEC. d'une donnée relative à une première commande de navigation (P+) sélectionnée sur le dispositif de télécommande natif (8), ladite première commande de navigation indiquant la sélection d'un contenu numérique par l'utilisateur du dispositif de restitution ;
- génération d'une seconde commande de navigation au moyen d'une table de conversion mettant en correspondance la donnée reçue relative à la première commande de navigation (P+) et le type du téléviseur ;
- analyse d'un fichier de description d'un contenu numérique , sélectionné en fonction de ladite seconde commande de navigation , pour déterminer une adresse de téléchargement progressif ;
- génération (E23, E'23) d'une requête de téléchargement progressif (REQ_CH2) du contenu numérique sélectionné (CH2), à partir de l'adresse de téléchargement progressif obtenue ;
- envoi (E23. E'23) de la requête de téléchargement progressif (REQ_CH2) vers le serveur de contenus (3) via la passerelle de service (6) .

2. Procédé de commande de restitution d'un contenu numérique selon la revendication 1, **caractérisé en ce que**, lors de la génération d'une requête de téléchargement progressif, un niveau de qualité de service est demandé.

3. Procédé de commande de restitution d'un contenu numérique selon la revendication 1 **caractérisé en ce qu'**il comporte en outre les étapes suivantes :
- réception, dans une période de temps donnée, d'une donnée relative à une troisième commande (P-) relative à un contenu numérique, en provenance d'un dispositif de télécommande (4) distinct du dispositif de télécommande natif (8) ;
- affectation d'une priorité à l'une des première ou troisième commandes ;
- adaptation de la requête de téléchargement (REQ_CH2) progressif générée pour tenir compte de cette priorité.

4. Dispositif de déport (5) pour la restitution d'un contenu numérique disponible en mode de téléchargement progressif sur un serveur de contenus (3) dans un réseau de communication étendu (1), ledit contenu étant accessible via au moins une passerelle de service (6) et pouvant être téléchargé pour être restitué sur au moins un téléviseur (7) apte à recevoir des contenus numériques :
- selon un premier mode, en provenance d'un réseau diffusé de télévision (DVB),
- selon un second mode, dit mode de téléchargement progressif, en provenance du dispositif de déport (clé TV), ledit téléviseur étant équipé d'un dispositif de télécommande natif (8) apte à contrôler la réception de programmes selon le premier mode, le dispositif de déport comportant :
- une interface de communication de type HDMI pour le connecter au téléviseur ;
- un module de réception, au format HDMI-CEC, d'une donnée relative à une première commande de navigation (P+) sélectionnée sur le dispositif de télécommande natif (8), ladite première commande de navigation indiquant la selection d'un contenu numérique par l'utilisateur du dispositif de restitution; ;
- un module de prise de contrôle du dispositif de restitution afin de le positionner dans le second mode, dit mode de téléchargement progressif (E30, E50)
- un module de génération d'une seconde commande de navigation mettant en correspondance, au moyen d'une table de conversion, la donnée reçue relative à la première commande de navigation (P+) et le type du téléviseur ;
- un module d'analyse d'un fichier de description d'un contenu numérique , sélectionné en fonction de ladite seconde commande de navigation, pour déterminer une adresse de téléchargement progressif ;
- un module de génération d'une reauête (REQ_CH2) de téléchargement progressif du contenu numérique sélectionné (CH2), à partir de l'adresse de téléchargement progressif obtenue ;
- un module d'envoi de la reauête de télécharaement progressif (REQ_CH2) vers le serveur de contenus (3) via la passerelle de service (6).

5. Dispositif de déport (5) selon la revendication 4, dans lequel :
- le module de réception est configuré pour recevoir, dans une période de temps donnée, une donnée relative à une troisième commande (P-) relative à un contenu numérique, en provenance d'un dispositif de télécommande (4) distinct du dispositif de télécommande natif (8) ;
et comprenant en outre :
- un module pour affecter une priorité à l'une des première ou troisième commandes ;
- un module pour adapter la requête de téléchargement (REQ_CH2) progressif générée pour tenir compte de cette priorité.

6. Système comprenant un téléviseur (7) doté d'une télécommande native (8), une passerelle de service (6), une télécommande secondaire (4) et un dispositif de déport (5) selon la revendication 4 ou 5.

7. Programme d'ordinateur comportant des instructions de code pour la mise en œuvre du procédé de commande de restitution conforme à la revendication 1, lorsque celle-ci est exécutée par un processeur.

## Patentansprüche

1. Verfahren zur Steuerung der Wiedergabe eines digitalen Inhalts (CH1, MV1, CH2), der im Progressive-Download-Modus auf einem Inhalteserver (3) in einem Weitverkehrs-Kommunikationsnetzwerk (1, WAN) verfügbar ist, wobei der Inhalt über mindestens einen Dienst-Gateway (4, 6) abrufbar ist und heruntergeladen werden kann, um auf mindestens einem Fernsehgerät (7) wiedergegeben zu werden, das digitale Inhalte empfangen kann:
- gemäß einem ersten Modus von einem Fernsehausstrahlungsnetzwerk (DVB);
- gemäß einem zweiten Modus, dem Progressive-Download-Modus, von einer Versatzvorrichtung (TV-Schlüssel), die über einen HDMI-Anschluss mit dem Fernsehgerät verbunden ist,
wobei das Fernsehgerät mit einer nativen Fernsteuervorrichtung (8) ausgerüstet ist, die geeignet ist, den Empfang von Programmen gemäß dem ersten Modus zu steuern,
wobei das Steuerungsverfahren **dadurch gekennzeichnet ist, dass** es die folgenden Schritte auf einem Steuerungsmodul aufweist, das sich auf der Versatzvorrichtung befindet:
- Übernehmen der Steuerung der Wiedergabevorrichtung, um sie im zweiten Modus, dem Progressive-Download-Modus, zu positionieren (E20, E30, E50);
- Empfangen (E22, E'22), von der Wiedergabevorrichtung (7), eines Datenelements im HDMI-CEC-Format in Bezug auf einen ersten Navigationsbefehl (P+), der auf der nativen Fernsteuervorrichtung (8) ausgewählt wird, wobei der erste Navigationsbefehl die Auswahl eines digitalen Inhalts durch den Benutzer der Wiedergabevorrichtung angibt;
- Erzeugen eines zweiten Navigationsbefehls mittels einer Umwandlungstabelle, die das empfangene Datenelement in Bezug auf den ersten Navigationsbefehl (P+) und den Typ des Fernsehgeräts in Entsprechung bringt;
- Analysieren einer Datei zur Beschreibung eines digitalen Inhalts, der je nach dem zweiten Navigationsbefehl ausgewählt wird, um eine Progressive-Download-Adresse zu bestimmen;
- Erzeugen (E23, E'23) einer Anforderung zum progressiven Download (REQ_CH2) des ausgewählten digitalen Inhalts (CH2) von der bezogenen Progressive-Download-Adresse;
- Senden (E23, E'23) der Progressive-Download-Anforderung (REQ_CH2) an den Inhalteserver (3) über den Dienst-Gateway (6).

2. Verfahren zur Steuerung der Wiedergabe eines digitalen Inhalts nach Anspruch 1, **dadurch gekennzeichnet, dass** bei der Erzeugung einer Progressive-Download-Anforderung ein Dienstgüte-Niveau angefordert wird.

3. Verfahren zur Steuerung der Wiedergabe eines digitalen Inhalts nach Anspruch 1, **dadurch gekennzeichnet, dass** es ferner die folgenden Schritte aufweist:
- Empfangen, in einem bestimmten Zeitraum, eines Datenelements in Bezug auf einen dritten Befehl (P-) in Bezug auf einen digitalen Inhalt von einer Fernsteuervorrichtung (4), die von der nativen Fernsteuervorrichtung (8) verschieden ist;
- Zuweisen einer Priorität an einen von dem ersten oder dritten Befehl;
- Anpassen der erzeugten Progressive-Download-Anforderung (REQ_CH2), um diese Priorität zu berücksichtigen.

4. Versatzvorrichtung (5) zur Wiedergabe eines digitalen Inhalts, der im Progressive-Download-Modus auf einem Inhalteserver (3) in einem Weitverkehrs-Kommunikationsnetzwerk (1) verfügbar ist, wobei der Inhalt über mindestens einen Dienst-Gateway (6) abrufbar ist und heruntergeladen werden kann, um auf mindestens einem Fernsehgerät (7) wiedergegeben zu werden, das digitale Inhalte empfangen kann:
- gemäß einem ersten Modus von einem Fernsehausstrahlungsnetzwerk (DVB),
- gemäß einem zweiten Modus, dem Progressive-Download-Modus, von der Versatzvorrichtung (TV-Schlüssel),
wobei das Fernsehgerät mit einer nativen Fernsteuervorrichtung (8) ausgerüstet ist, die geeignet ist, den Empfang von Programmen gemäß dem ersten Modus zu steuern,
die Versatzvorrichtung aufweisend:
- eine HDMI-Kommunikationsschnittstelle, um sie mit dem Fernsehgerät zu verbinden;
- ein Modul zum Empfangen, im HDMI-CEC-Format, eines Datenelements in Bezug auf einen ersten Navigationsbefehl (P+), der auf der nativen Fernsteuervorrichtung (8) ausgewählt wird, wobei der erste Navigationsbefehl die Auswahl eines digitalen Inhalts durch den Benutzer der Wiedergabevorrichtung angibt;
- ein Modul zum Übernehmen der Steuerung der Wiedergabevorrichtung, um sie im zweiten Modus, dem Progressive-Download-Modus, zu positionieren (E30, E50);
- ein Modul zum Erzeugen eines zweiten Navigationsbefehls, der das empfangene Datenelement in Bezug auf den ersten Navigationsbefehl (P+) und den Typ des Fernsehgeräts mittels einer Umwandlungstabelle in Entsprechung bringt;
- ein Modul zum Analysieren einer Datei zur Beschreibung eines digitalen Inhalts, der je nach dem zweiten Navigationsbefehl ausgewählt wird, um eine Progressive-Download-Adresse zu bestimmen;
- ein Modul zum Erzeugen einer Anforderung (REQ_CH2) zum progressiven Download des ausgewählten digitalen Inhalts (CH2) von der bezogenen Progressive-Download-Adresse;
- ein Modul zum Senden der Progressive-Download-Anforderung (REQ_CH2) an den Inhalteserver (3) über den Dienst-Gateway (6).

5. Versatzvorrichtung (5) nach Anspruch 4, wobei:
- das Empfangsmodul dazu ausgebildet ist, in einem bestimmten Zeitraum ein Datenelement in Bezug auf einen dritten Befehl (P-) in Bezug auf einen digitalen Inhalt von einer Fernsteuervorrichtung (4) zu empfangen, die von der nativen Fernsteuervorrichtung (8) verschieden ist; und ferner umfassend:
- ein Modul zum Zuweisen einer Priorität an einen von dem ersten oder dritten Befehl;
- ein Modul zum Anpassen der erzeugten Progressive-Download-Anforderung (REQ_CH2), um diese Priorität zu berücksichtigen.

6. System umfassend ein Fernsehgerät (7), das mit einer nativen Fernsteuerung (8) versehen ist, einen Dienst-Gateway (6), eine sekundäre Fernsteuerung (4) und eine Versatzvorrichtung (5) nach Anspruch 4 oder 5.

7. Computerprogramm umfassend Code-Anweisungen für die Durchführung des Verfahrens zur Wiedergabesteuerung nach Anspruch 1, wenn diese von einem Prozessor ausgeführt wird.

## Claims

1. Method for controlling the rendering of an item of digital content (CH1, MV1, CH2), which is available in progressive download mode on a content server (3) in a wide area communication network (1, WAN), said content being accessible via at least one service gateway (4, 6) and being able to be downloaded in order to be rendered on at least one television (7) capable of receiving digital content:
- according to a first mode, from a broadcast television network (DVB);
- according to a second mode, known as the progressive download mode, from a transfer device (TV stick) connected to the television via an HDMI port,
said television being provided with a native remote control device (8) capable of controlling the reception of programmes according to the first mode, the control method being **characterized in that** it includes the following steps, on a control module located on the transfer device:
- taking control of the rendering device in order to place it in the second mode, known as the progressive download mode (E20, E30, E50);
- receiving (E22, E'22), from the rendering device (7), in the HDMI-CEC format, a datum relating to a first navigation command (P+) selected on the native remote control device (8), said first navigation command indicating the selection of an item of digital content by the user of the rendering device;
- generating a second navigation command by means of a conversion table that matches the received datum relating to the first navigation command (P+) to the type of television;
- analysing a file describing an item of digital content, selected on the basis of said second navigation command, in order to determine a progressive download address;
- generating (E23, E'23) a progressive download request (REQ_CH2) for downloading the selected item of digital content (CH2) from the obtained progressive download address;
- sending (E23, E'23) the progressive download request (REQ_CH2) to the content server (3) via the service gateway (6).

2. Method for controlling the rendering of an item of digital content according to Claim 1, **characterized in that**, when a progressive download request is generated, a quality of service level is requested.

3. Method for controlling the rendering of an item of digital content according to Claim 1, **characterized in that** it further includes the following steps:
- receiving, within a given period of time, a datum relating to a third command (P-) in relation to an item of digital content from a remote control device (4) distinct from the native remote control device (8);
- assigning a priority to one of the first and third commands;
- adapting the generated progressive download request (REQ_CH2) so as to take this priority into account.

4. Transfer device (5) for rendering an item of digital content, which is available in progressive download mode on a content server (3) in a wide area communication network (1), said content being accessible via at least one service gateway (6) and being able to be downloaded in order to be rendered on at least one television (7) capable of receiving digital content:
- according to a first mode, from a broadcast television network (DVB),
- according to a second mode, known as the progressive download mode, from the transfer device (TV stick),
said television being provided with a native remote control device (8) capable of controlling the reception of programmes according to the first mode, the transfer device including:
- an HDMI-type communication interface for connecting it to the television;
- a module for receiving, in the HDMI-CEC format, a datum relating to a first navigation command (P+) selected on the native remote control device (8), said first navigation command indicating the selection of an item of digital content by the user of the rendering device;
- a module for taking control of the rendering device in order to place it in the second mode, known as the progressive download mode (E30, E50);
- a module for generating a second navigation command, which matches, by means of a conversion table, the received datum relating to the first navigation command (P+) to the type of television;
- a module for analysing a file describing an item of digital content, selected on the basis of said second navigation command, in order to determine a progressive download address;
- a module for generating a progressive download request (REQ_CH2) for downloading the selected item of digital content (CH2) from the obtained progressive download address;
- a module for sending the progressive download request (REQ_CH2) to the content server (3) via the service gateway (6).

5. Transfer device (5) according to Claim 4, wherein:
- the receiving module is configured to receive, within a given period of time, a datum relating to a third command (P-) in relation to an item of digital content from a remote control device (4) distinct from the native remote control device (8);
and further comprising:
- a module for assigning a priority to one of the first and third commands;
- a module for adapting the generated progressive download request (REQ_CH2) so as to take this priority into account.

6. System comprising a television (7) provided with a native remote control (8), a service gateway (6), a secondary remote control (4) and a transfer device (5) according to Claim 4 or 5.

7. Computer program including code instructions for the implementation of the method for controlling rendering in accordance with Claim 1 when it is executed by a processor.
